# EUROPÄISCHE PATENTSCHRIFT

(11) **EP 3 058 391 B1**
(45) Veröffentlichungstag und Bekanntmachung des Hinweises auf die Patenterteilung: **29.05.2019**
(21) Anmeldenummer: 14790538.4
(22) Anmeldetag: 16.10.2014
(51) Int. Cl.: G01S 17/93, G01S 7/41, G06K 9/20, G06K 9/46, G01S 13/93, G06K 9/00

(54) **VERWENDUNG EINES VERFAHRENS UND EINER VORRICHTUNG ZUM KLASSIFIZIEREN VON HINDERNISSEN**
USE OF A METHOD AND OF AN APPARATUS FOR CLASSIFICATION OF OBSTACLES
UTILISATION D'UN PROCÉDÉ ET D'UN DISPOSITIF DE CLASSIFICATION D'OBSTACLES

(30) Priorität: 18.10.2013 DE 102013017347
(43) Veröffentlichungstag der Anmeldung: 24.08.2016
(73) Patentinhaber: KNORR-BREMSE Systeme für Nutzfahrzeuge GmbH, 80809 München (DE)
(72) Erfinder: GÜCKER, Ulrich, 71701 Schwieberdingen (DE); HECKER, Falk, 71706 Markgröningen (DE); MAYER, Jan, 71691 Freiberg am Neckar (DE); KAYALAR, Münir, 71101 Schönaich (DE)
(86) Internationale Anmeldenummer: PCT/EP2014/072170
(87) Internationale Veröffentlichungsnummer: WO 2015/055746

(56) Entgegenhaltungen:
- DE-A1-102011 121 560
- US-A1- 2008 019 567
- CHENGZHI YANG ET AL: "A Radar Signal Sorting algorithm based on shifting grids technique", SYSTEMS AND INFORMATICS (ICSAI), 2012 INTERNATIONAL CONFERENCE ON, IEEE, 19. Mai 2012 (2012-05-19), Seiten 2371-2373, XP032193008, DOI: 10.1109/ICSAI.2012.6223530 ISBN: 978-1-4673-0198-5

## Beschreibung

Die Erfindung betrifft ein Verfahren zum Erkennen und Klassifizieren von mittels einer aktiv Strahlung aussendenden Sensoreinrichtung erfassten Objekten hinsichtlich ihrer Relevanz für eine Fahrsituation eines sich bewegenden Kraftfahrzeugs, gemäß dem Oberbegriff von Anspruch 1, sowie von einer Vorrichtung zum Erkennen und Klassifizieren von mittels einer aktiv Strahlung aussendenden Sensoreinrichtung erfassten Objekten hinsichtlich ihrer Relevanz für eine Fahrsituation eines sich bewegenden Kraftfahrzeugs, gemäß dem Oberbegriff von Anspruch 3. Weiterhin betrifft die Erfindung auch eine Verwendung eines solchen Verfahrens bzw. einer solchen Vorrichtung für eine Geschwindigkeitsregelung eines Kraftfahrzeugs gemäß Anspruch 5.

Ein solches Verfahren bzw. eine solche Vorrichtung ist aus US 2008/019567 A1 bekannt. CHENGZHI YANG et al. beschreiben in: "A Radar Signal Sorting algorithm based on shifting grids technique", SYSTEMS AND INFORMATICS (ICSAI), 2012 INTERNATIONAL CONFERENCE ON, IEEE, 19. Mai 2012 (2012-05-19), Seiten 2371-2373 einen Sortieralgorithmus für Radarsignale.

DE 10 2011 121 560 A1 beschreibt ein Verfahren zur Detektion und Klassifikation von Objekten anhand von Radardaten, wobei aus den Radardaten eine Entfernung, eine Geschwindigkeit und/oder ein Winkel zumindest eines Objektes bezüglich eines Referenzobjektes ermittelt werden. Weiterhin werden für gleiche Entfernungen Entfernungszellen und/oder für gleiche Winkel Winkelzellen gebildet und für in den Entfernungszellen und/oder Winkelzellen befindliche Punktziele zumindest eines Objektes werden zu definierten Zeitpunkten die Geschwindigkeiten und daraus Geschwindigkeitsprofile ermittelt. Weiterhin werden für mehrere Punktziele des zumindest einen Objektes anhand einer Aneinanderreihung zeitlich nacheinander erfasster Geschwindigkeitsprofile zeitliche Geschwindigkeitsverläufe ermittelt, wobei anhand der zeitlichen Geschwindigkeitsverläufe mehrerer zu einem Objekt gehöriger Punktziele das zumindest eine Objekt klassifiziert wird.

DE 10 2005 024 716 A1 beschreibt ein Verfahren, bei dem die von den Objekten reflektierte Strahlung als Messwerte mit hinterlegten charakteristischen Werten verglichen und ausgewertet wird. Aufgrund der Auswertung wird auf die Klasse des reflektierenden Objekts geschlossen. Solche Verfahren werden bevorzugt zur adaptiven Abstands- und Geschwindigkeitsregelung von Fahrzeugen und/oder zur Auslösung einer Notbremse eingesetzt, bei denen in die Steuerung des Motors und der Bremsen fahrsituationsabhängig eingegriffen wird.

Bei Geschwindigkeitsregelsystemen wird eine vom Fahrzeugführer vorgegebene Geschwindigkeit beibehalten. Bei größerer Verkehrsdichte bleibt dem Fahrzeugführer allerdings nur dessen Eingriff durch Betätigung der Bremsen, um auf langsamer vorausfahrende oder die Fahrspur wechselnde Fahrzeuge zu reagieren. Deshalb wurden Geschwindigkeitsregelsysteme weiterentwickelt, bei denen eine Sensoreinrichtung eine Strahlung aussendet und in einer Auswerteeinrichtung Signale, welche sich aus der an einem Objekt beispielsweise in Form eines vorausfahrenden Fahrzeugs reflektierten und von der Sensoreinrichtung empfangenen Echostrahlung ergeben, ausgewertet werden, um Rückschlüsse auf den Abstand zu dem Objekt zu ziehen und in die Steuerung des Motors und/oder der Bremsen einzugreifen, falls ein gewisser Mindestabstand unterschritten wurde. Solche intelligenten Geschwindigkeitsregelsysteme werden auch Adaptive Cruise Control (ACC) genannt.

Die Sensoreinrichtung beinhaltet meist einen Infrarot-Laser oder ein Millimeter-Radar, welcher den Bereich vor dem Fahrzeug innerhalb eines Radar-oder Laserkegels abtastet, um sich dort befindende Objekte zu erkennen und deren Abstand und Geschwindigkeit in Bezug zum Fahrzeug zu bestimmen. Durch die Auswerteeinrichtung wird dann auf die Relevanz der identifizierten Objekte bezüglich des Fahrwegs des Fahrzeugs geschlossen und der Abstand des Fahrzeugs zum identifizierten Objekt auf einen bestimmten Sollabstand eingeregelt.

Die Radar- oder Infrarot-Sensoreinrichtungen des Stands der Technik sind dabei zwar in der Lage, den Abstand, die Relativgeschwindigkeit und den Azimutwinkel von identifizierten Objekten in Bezug zum Fahrweg des Fahrzeugs zu erfassen, weil angenommen wird, dass sich die Objekte in einer Ebene parallel zur oder in Fahrbahnebene befinden. Eine solche Annahme ist vertretbar, solange als Objekt ein vorausfahrendes Fahrzeug erfasst wird.

Solche Systeme erfassen jedoch nicht den Elevationswinkel zwischen der Ebene, in welcher sich das Fahrzeug bewegt (Fahrbahn bzw. horizontale Fahrzeugebene) und einem sich demgegenüber in einer gewissen Entfernung in vertikaler Richtung erstreckenden Objekt wie beispielsweise Brücken, Schilderbrücken oder Tunnels. Bisherige adaptive Geschwindigkeitsregelsysteme sind daher fehlerhaft in Bezug zur Abschätzung der Geschwindigkeit eines Objekts, welches einen relativ großen Elevationswinkel in Bezug zum Fahrzeug aufweist. Diese Problematik wird ausführlich in DE 10 2008 009 597 A1 erläutert.

Bei Fahrten unter Brücken hindurch, bei denen der Elevationswinkel in Bezug zum eigenen Fahrzeug relativ groß ist, ergibt sich daher das Problem, dass Fehler in der Abschätzung der Geschwindigkeit solcher für eine Geschwindigkeitsnachfolgeregelung eigentlich nicht relevanter Objekte Fehler in der Identifikation und Klassifizierung der Objekte ergeben. In der Konsequenz können dann Brücken, Schilderbrücken, Tunnels wie auch hoch stehende Verkehrszeichen fehlerhaft als relevante bewegte Objekte identifiziert und klassifiziert werden, weshalb nicht auszuschließen ist, dass vor dem oder beim Passieren solcher Objekte unerwünschte Bremsungen eingeleitet werden. In extremen Fällen kann sogar eine Notbremsung auf freier Strecke eingeleitet werden, was die Verkehrssicherheit beeinträchtigt.

Die Aufgabe der Erfindung besteht demgegenüber darin, ein Verfahren und eine Vorrichtung der eingangs erwähnten Art zur Verfügung zu stellen, welches bzw. welche derart fortgebildet ist, dass die oben erwähnten Nachteile vermieden werden. Weiterhin soll auch eine vorteilhafte Verwendung des Verfahrens bzw. der Vorrichtung zur Verfügung gestellt werden.

Diese Aufgabe wird erfindungsgemäß durch die Merkmale der Ansprüche 1, 3 und 5 gelöst.

### Offenbarung der Erfindung

Die Erfindung geht aus von einem Verfahren zum Erkennen und Klassifizieren von mittels einer aktiv Strahlung aussendenden Sensoreinrichtung erfassten Objekten hinsichtlich ihrer Relevanz für eine Fahrsituation eines sich bewegenden Fahrzeugs, wobei von der Sensoreinrichtung Strahlung ausgesandt und die an Objekten reflektierte Echostrahlung als Messwerte empfangen werden, beinhaltend folgende Schritte:
a) Erfassen von Messwerten in Bezug zur Fahrsituation des sich bewegenden Fahrzeugs,
b) Durchführen einer Analyse der durch die Messwerte abgebildeten Fahrsituation und Identifizieren wenigstens eines möglichen Objekts,
c) Klassifizieren des wenigstens einen identifizierten Objekts in eine Objektklasse einer Mehrzahl von Objektklassen, wobei
d) das Durchführen der Analyse der Messwerte folgendes beinhaltet:
   d1) eine Transformation der erfassten Messwerte von einem fahrzeugfesten Koordinatensystem in ein raumfestes Koordinatensystem zur Erzeugung raumkoordinatenfester Messwerte, wobei diese Transformation auf der Basis der Fahrzeuggeschwindigkeit und der Gierrate des Fahrzeugs in der bestimmten Fahrsituation basiert,
   d2) Unterteilen wenigstens einer im Erfassungsbereich der Strahlung aussendenden Sensoreinrichtung befindlichen und zur Fahrbahnoberfläche koplanaren oder parallelen Gesamtfläche in mehrere Teilflächen,
   d3) Bestimmen der Anzahl und/oder der Streuung der erfassten raumkoordinatenfesten Messwerte für jede dieser Teilflächen, wobei
e) das Durchführen der Analyse der durch die Messwerte abgebildeten Fahrsituation und Identifizieren wenigstens eines möglichen Objekts folgendes beinhaltet:
   e1) Vergleichen der Anzahl und/oder sowie Streuung der erfassten raumkoordinatenfesten Messwerte für jede dieser Teilflächen jeweils mit und charakteristischen Mustern,
   e2) Identifizieren wenigstens eines eventuell in einer Teilfläche vorhandenen Objekts und Klassifizieren des wenigstens einen identifizierten Objekts in eine Objektklasse der Mehrzahl von Objektklassen abhängig von diesem Vergleich.

Das Verfahren schlägt erfindungsgemäß vor, dass
f) aneinander angrenzende Teilflächen sich teilweise überlappen, wobei sich aneinander angrenzende Teilflächen nur teilweise, aber nicht vollständig überlappen, und
g) die Anzahl und/oder die Streuung der erfassten raumkoordinatenfesten Messwerte für jede dieser Teilflächen mit jeweils einem Schwellwert verglichen und bei Überschreiten der Schwellwerte für Anzahl und/oder Streuung durch die für die betreffende Teilfläche erfassten raumkoordinatenfesten Messwerte ein in der betreffenden Teilfläche vorhandenes Objekt identifiziert wird, und wobei
h) das Klassifizieren des identifizierten Objekts in eine Objektklasse der Mehrzahl von Objektklassen abhängig davon erfolgt, ob die Anzahl und/oder die Streuung der für die betreffende Teilfläche erfassten raumkoordinatenfesten Messwerte jeweils den zugeordneten Schwellwert überschritten hat oder nicht.

Die Erfindung geht weiterhin aus von einer Vorrichtung zum Erkennen und Klassifizieren von mittels einer aktiv Strahlung aussendenden Sensoreinrichtung erfassten Objekten hinsichtlich ihrer Relevanz für eine bestimmte Fahrsituation eines sich bewegenden Fahrzeugs, wobei die Sensoreinrichtung ausgebildet ist, um Strahlung auszusenden und die an Objekten reflektierte Echostrahlung als Messwerte zu empfangen. Bei der Vorrichtung ist eine Auswerteeinrichtung zur Auswertung der durch die Sensoreinrichtung erfassten Messwerte vorgesehen, welche derart ausgebildet ist, dass sie
- eine Transformation der erfassten Messwerte von einem fahrzeugfesten Koordinatensystem in ein raumfestes Koordinatensystem zur Erzeugung raumkoordinatenfester Messwerte durchführt, wobei diese Transformation auf der Basis der Fahrzeuggeschwindigkeit und der Gierrate des Fahrzeugs in der bestimmten Fahrsituation basiert, und
- eine im Erfassungsbereich der Strahlung aussendenden Sensoreinrichtung befindliche und zur Fahrbahnoberfläche koplanare oder parallele Gesamtfläche in mehrere Teilflächen unterteilt, und
- die Anzahl sowie die Streuung der erfassten raumkoordinatenfesten Messwerte für jede dieser Teilflächen bestimmt, und
- die Anzahl und/oder die Streuung der erfassten raumkoordinatenfesten Messwerte für jede dieser Teilflächen jeweils mit charakteristischen Mustern vergleicht, und
- wenigstens ein eventuell in einer Teilfläche vorhandenes Objekts identifiziert und das wenigstens eine identifizierte Objekt in eine Objektklasse einer Mehrzahl von Objektklassen abhängig von diesem Vergleich klassifiziert.

Die Vorrichtung schlägt erfindungsgemäß vor, dass die Auswerteeinrichtung weiterhin derart ausgebildet ist, dass
- aneinander angrenzende Teilflächen sich teilweise überlappen, wobei sich aneinander angrenzende Teilflächen nur teilweise, aber nicht vollständig überlappen, und
- die Anzahl und/oder die Streuung der erfassten raumkoordinatenfesten Messwerte für jede dieser Teilflächen mit jeweils einem Schwellwert verglichen und bei Überschreiten der Schwellwerte für Anzahl und/oder Streuung durch die für die betreffende Teilfläche erfassten raumkoordinatenfesten Messwerte ein in der betreffenden Teilfläche vorhandenes Objekt identifiziert wird, und
- das Klassifizieren des identifizierten Objekts in eine Objektklasse der Mehrzahl von Objektklassen abhängig davon erfolgt, ob die Anzahl und/oder die Streuung der für die betreffende Teilfläche erfassten raumkoordinatenfesten Messwerte jeweils den zugeordneten Schwellwert überschritten hat oder nicht.

Daher wird die Anzahl und/oder die Streuung der erfassten raumkoordinatenfesten Messwerte für jede der Teilflächen mit jeweils einem Schwellwert verglichen und bei Überschreiten der Schwellwerte für Anzahl und/oder Streuung durch die für betreffende Teilfläche erfassten raumkoordinatenfesten Messwerte ein in der betreffenden Teilfläche vorhandenes Objekt identifiziert. Schließlich erfolgt das Klassifizieren des identifizierten Objekts in eine Objektklasse einer Mehrzahl von Objektklassen ebenfalls abhängig davon, ob die Anzahl und/oder die Streuung der für die betreffende Teilfläche erfassten raumkoordinatenfesten Messwerte jeweils den zugeordneten Schwellwert überschritten hat oder nicht.

Mit anderen Worten werden für den Fall, dass als Sensoreinrichtung ein Radarsystem verwendet wird, die von Reflexionen herrührenden Radarechosignale in ein raumfestes Koordinatensystem transformiert und abhängig von ihren Eigenschaften, insbesondere abhängig von ihrer Häufigkeitsverteilung (Histogramm) bezogen auf die Teilflächen Objekte identifiziert und klassifiziert. Durch dieses Verfahren können bewegte und beispielsweise für eine Geschwindigkeitsfolgeregelung relevante Objekte von nicht relevanten Objekten unterschieden und insbesondere Brücken, Schilderbrücken oder Tunnels identifiziert werden. Letztlich können durch die verbesserte Identifizierung und Klassifizierung unerwünschte Bremseingriffe durch die Geschwindigkeitsfolgeregelung vermieden werden.

Die Transformation der erfassten Messwerte von einem fahrzeugfesten Koordinatensystem in ein raumfestes Koordinatensystem zur Erzeugung raumkoordinatenfester Messwerte bringt dabei den Vorteil, dass in einem raumfesten Koordinatensystem erfasste Objekte wie Brücken, Schilderbrücken oder Tunnels von sich bewegenden Objekten wie Fahrzeugen besser unterschieden werden können.

Indem wenigstens eine im Erfassungsbereichs der Strahlung aussendenden Sensoreinrichtung befindliche und zur Fahrbahnoberfläche koplanare oder parallele Gesamtfläche in mehrere Teilflächen unterteilt wird, werden diskrete Bereiche geschaffen, in denen es aufgrund ihrer begrenzten Dimension jeweils einfacher ist, einer Teilfläche zugeordnete Echosignale auszuwerten. Zum andern wird durch die Teilüberlappung aneinander angrenzender Teilflächen der Fall vermieden, dass sich ein Objekt gerade am Stoß zweier nicht überlappender Teilflächen befindet und deshalb nicht eindeutig erfasst werden kann. Unter Teilüberlappung soll daher verstanden werden, dass sich aneinander angrenzende Teilflächen nur teilweise, aber nicht vollständig überlappen. Diese Teilüberlappung der Teilflächen soll vorzugsweise in Fahrtrichtung des Fahrzeugs bzw. in der Erfassungsrichtung der Sensoreinrichtung vorgenommen werden.

Die sich anschließenden Schritte, bei denen die Anzahl und/oder die Streuung der erfassten raumkoordinatenfesten Messwerte für jede dieser Teilflächen mit jeweils charakteristischen Mustern verglichen und wenigstens ein eventuell in einer dieser Teilflächen vorhandenes Objekt abhängig von dem Vergleich der Anzahl und/oder der Streuung der erfassten raumkoordinatenfesten Messwerte für jede dieser Teilflächen mit den jeweils charakteristischen Mustern identifiziert und in eine Objektklasse einer Mehrzahl von Objektklassen klassifiziert wird, nutzen statistische Größen. Unter dem Begriff "Streuung" werden allgemein verschiedene statistische Maßzahlen zusammengefasst, welche die Streubreite von Werten, hier Messwerten einer Häufigkeitsverteilung (Histogramm) um einen Lageparameter herum beschreiben. Die verschiedenen Maßzahlen unterscheiden sich dabei durch ihre Empfindlichkeit gegenüber Ausreißern. Eine typische solche Maßzahl stellt beispielsweise die Varianz oder Standardabweichung dar. Das dem Vergleich zugrunde liegende Muster für eine solche Streuungs-Maßzahl wird anhand von charakteristischen Erfahrungswerten vorgegeben. Bei einer Brücke etwa sind die Messwerte bezogen auf die Fahrbahnbreite typischerweise auf eine relativ große Breite verteilt und gegenüber der freien Umgebung in größerer Dichte vorhanden.

Ein alternatives oder zusätzliches Kriterium bei der Identifikation von Objekten stellt die Anzahl der in einer Teilfläche erfassten raumkoordinatenfesten Messwerte dar. Bei einer Brücke etwa sind die Messwerte gegenüber der freien Umgebung absolut in größerer Anzahl vorhanden.

In die Objektklasse relevanter Objekte fallen dann Objekte, welche dem Muster eines vorausfahrenden Fahrzeugs entsprechen, wobei hier die Relevanz bevorzugt in Bezug zu einer Geschwindigkeitsfolgeregelung wie ACC gegeben ist. Demgegenüber fallen Brücken, Schilderbrücken oder Tunnels in die Objektklasse nicht relevanter Objekte, weil diese Objekte bei einer Geschwindigkeitsfolgeregelung keine Reaktion hervorrufen sollen. Die Klassifizierung der Objekte in Objektklassen ist jedoch beliebig und kann vom Fachmann bedarfsweise vorgenommen werden.

Bei dem erfindungsgemäßen Verfahren bzw. bei der erfindungsgemäßen Vorrichtung können auch relevante Objekte identifiziert und klassifiziert werden, die sich im Bereich eines raumfesten Objekts wie einer Brücke befinden. Denn anhand der Streuung (Gestalt bzw. Eigenschaft des Histogramms) der lateralen Position der Messwerte kann entschieden werden, ob ein relevantes Objekt wie ein vorausfahrendes Fahrzeug eine Brücke unterfährt. Ein relevantes Objekt wie ein vorausfahrendes Fahrzeug stellt im Vergleich zu einer Brücke ein eher konzentriertes Objekt (Punktobjekt) dar. Deshalb streuen die Messwerte eines relevanten Objekts lateral, d.h. in der Breite weniger stark als bei einer nicht relevanten Brücke. Dieser Unterschied ist anhand der Gestalt bzw. der Struktur des Histogramms erkennbar.

Durch die in den Unteransprüchen aufgeführten Maßnahmen sind vorteilhafte Weiterbildungen und Verbesserungen der in Anspruch 1 angegebenen Erfindung möglich.

Besonders bevorzugt wird aus den erfassten raumkoordinatenfesten Messwerten für jede der Teilflächen ein Histogramm erstellt und das Klassifizieren eines in einer Teilfläche eventuell identifizierten Objekts in eine Objektklasse einer Mehrzahl von Objektklassen erfolgt abhängig vom Histogramm der für die jeweilige Teilfläche erfassten raumkoordinatenfesten Messwerte.

Weitere die Erfindung verbessernde Maßnahmen werden nachstehend in der Beschreibung eines Ausführungsbeispiels der Erfindung und in der Zeichnung näher dargestellt.

### Zeichnung

Nachstehend ist ein Ausführungsbeispiel der Erfindung in der Zeichnung dargestellt und in der nachfolgenden Beschreibung näher erläutert. In der Zeichnung zeigt
- Fig.1: eine Darstellung von durch Fahrt in Richtung einer Brücke und mit Hilfe einer bevorzugten Ausführungsform des Verfahrens bzw. der Vorrichtung gemäß der Erfindung gewonnener Messwerte, mit Darstellung von Teilflächen einer auf Objekte zu untersuchenden Gesamtfläche;
- Fig.2: eine Darstellung von durch Fahrt in Richtung einer Schilderbrücke und mit Hilfe einer bevorzugten Ausführungsform des Verfahrens bzw. der Vorrichtung gemäß der Erfindung gewonnener Messwerte.

### Beschreibung des Ausführungsbeispiels

Nachstehend wird ein bevorzugtes Ausführungsbeispiel eines Verfahrens und einer Vorrichtung zum Erkennen und Klassifizieren von mittels einer aktiv Strahlung aussendenden Sensoreinrichtung wie einer nach dem Laser-Prinzip oder dem Radar-Prinzip arbeitenden und an sich bekannten Sensoreinrichtung erfassten Objekten hinsichtlich ihrer Relevanz für eine bestimmte Fahrsituation eines sich bewegenden Fahrzeugs vorgestellt.

Die Sensoreinrichtung ist beispielsweise eine Radarsensoreinrichtung, wobei von der Radarsensoreinrichtung Radarstrahlung ausgesandt und die an im Erfassungsbereich der Radarstrahlung eventuell vorhandenen Objekten reflektierte Radarechostrahlung als Messwerte empfangen wird.

Das Verfahren beinhaltend folgende grundlegende Schritte:
- Erfassen von Messwerten in Bezug zur Fahrsituation des sich bewegenden Fahrzeugs,
- Durchführen einer Analyse der durch die Messwerte abgebildeten Fahrsituation und Identifizieren wenigstens eines möglichen Objekts, und
- Klassifizieren des wenigstens einen identifizierten Objekts in eine Objektklasse einer Mehrzahl von Objektklassen eines Fahrzeugs,

Diese grundlegenden und bekannten Verfahrensschritte werden gemäß der Erfindung wie folgt realisiert.

Zunächst erfolgt eine Transformation der erfassten Messwerte von einem fahrzeugfesten Koordinatensystem in ein raumfestes Koordinatensystem zur Erzeugung raumkoordinatenfester Messwerte, wobei diese Transformation auf der Basis der Fahrzeuggeschwindigkeit und der Gierrate des Fahrzeugs in der gerade vorliegenden Fahrsituation basiert.

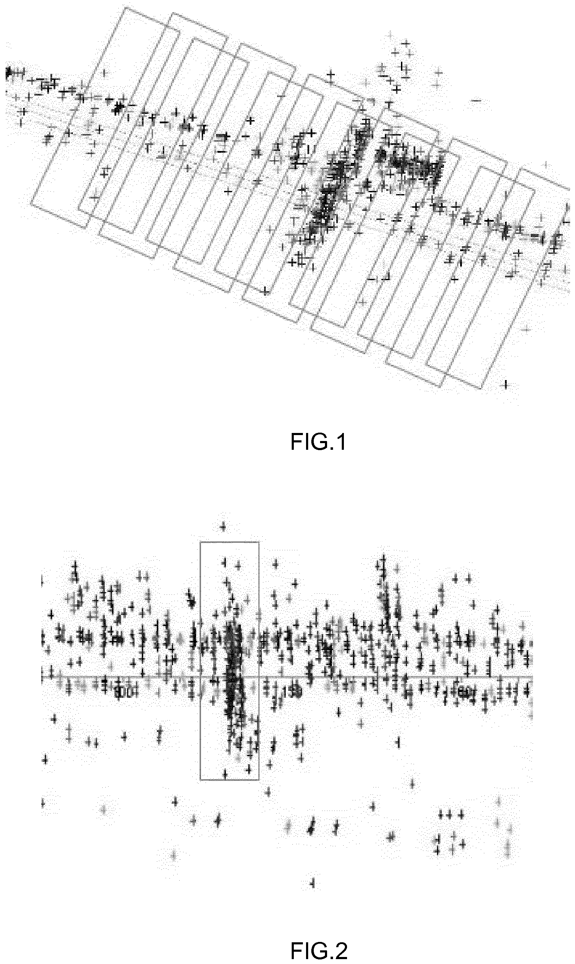

Weiterhin wird eine im Erfassungsbereich der Radarsensoreinrichtung und insbesondere in deren Erfassungsbereich befindliche und zur Fahrbahnoberfläche koplanare oder parallele Gesamtfläche in mehrere Teilflächen unterteilt, wobei aneinander angrenzende Teilflächen sich teilweise überlappen. Diese Vorgehensweise wird in Fig.1 veranschaulicht, in welcher beispielsweise die vor dem sich in Fahrt befindenden Fahrzeug gelegene Fahrbahn in Fahrtrichtung in mehrere sich teilweise überlappende Teilflächen 1, 2, 3 bis n unterteilt wird. Sodann werden mit Hilfe einer Auswerteeinrichtung der Vorrichtung die Anzahl und die Streuung der erfassten raumkoordinatenfesten Messwerte für jede dieser Teilflächen 1, 2, 3 bis n bestimmt. In Fig.1 sind die einzelnen von der Sensoreinrichtung erfassten Messwerte durch jeweils ein Kreuz gekennzeichnet. Die Messwerte werden bevorzugt in einer Messwerttabelle abgelegt, in welcher in einer Richtung die jeweiligen Teilflächen und in der anderen Richtung die der jeweiligen Teilfläche zugeordnete Anzahl und Streuung der Messwerte angetragen sind.

In sich anschließenden Schritten werden die Anzahl und die Streuung der erfassten raumkoordinatenfesten Messwerte für jede dieser Teilflächen 1, 2, 3 bis n jeweils mit charakteristischen Mustern verglichen und wenigstens ein in einer Teilfläche eventuell vorhandenes Objekt abhängig von diesem Vergleich identifiziert. Das identifizierte Objekt wird sodann in eine Objektklasse einer Mehrzahl von Objektklassen abhängig von dem Vergleich klassifiziert. Hierzu, d.h. für die Identifikation und Klassifizierung werden bevorzugt statistische Größen wie die Streuung herangezogen.

Für die Streuung wird hier bevorzugt als statistische die Häufigkeitsverteilung (Histogramm) der erfassten Messwerte verwendet. Das dem Vergleich zugrunde liegende Muster für die Häufigkeitsverteilung wird anhand von charakteristischen Erfahrungswerten vorgegeben. Bei einer Brücke etwa sind die Messwerte bezogen auf die Fahrbahnbreite typischerweise auf eine relativ große Breite verteilt und gegenüber der freien Umgebung in größerer Dichte vorhanden, was sich in einem charakteristischen Histogramm als charakteristisches Muster niederschlägt, wie aus Fig.1 hervorgeht.

Ein zusätzliches Kriterium bei der Identifikation und Klassifizierung von Objekten stellt die Anzahl der in einer Teilfläche erfassten raumkoordinatenfesten Messwerte dar. Bei einer Brücke etwa sind die Messwerte gegenüber der freien Umgebung in absolut größerer Anzahl vorhanden. Wenn daher beispielsweise die in einer Teilfläche erfasste Anzahl von Messwerten einen vorgegebenen Schwellwert überschreitet, so ist dies ein Indiz für das Vorhandensein einer Brücke in dieser Teilfläche.

In Fig.1 wird beispielsweise anhand einer in einer Teilfläche erfassten Anzahl und Häufigkeitsverteilung von Messwerten und dem Vergleich mit einer charakteristischen, einer Brücke zugeordneten Anzahl und Häufigkeitsverteilung in dieser Teilfläche X auf das Vorhandensein einer Brücke in dieser Teilfläche geschlossen.

Anstatt beider Kriterien - Streuung und Anzahl der erfassten Messwerte - kann auch nur ein einziges Kriterium - Streuung oder Anzahl der erfassten Messwerte - herangezogen werden.

Da das Verfahren bzw. die Vorrichtung bevorzugt für eine Geschwindigkeitsfolgeregelung eines Kraftfahrzeugs verwendet wird, fallen in eine Objektklasse relevanter Objekte dann beispielsweise Objekte, welche dem Muster eines vorausfahrenden oder auf die Fahrbahn einscherenden Fahrzeugs entsprechen. Demgegenüber fallen Brücken, Schilderbrücken oder Tunnels in die Objektklasse nicht relevanter Objekte, weil diese Objekte bei einer Geschwindigkeitsfolgeregelung keine Reaktion hervorrufen sollen.

Mit dem erfindungsgemäßen Verfahren bzw. mit der erfindungsgemäßen Vorrichtung können auch relevante Objekte identifiziert und klassifiziert werden, die sich im Bereich eines nicht relevanten raumfesten Objekts wie einer Brücke befinden. Denn anhand der Häufigkeitsverteilung (Histogramm) der lateralen Position der Messwerte kann entschieden werden, ob ein relevantes Objekt wie ein vorausfahrendes Fahrzeug eine Brücke unterfährt. Ein relevantes Objekt wie ein vorausfahrendes Fahrzeug stellt im Vergleich zu einer Brücke ein eher konzentriertes Objekt (Punktobjekt) dar. Deshalb streuen die Messwerte eines relevanten Objekts lateral, d.h. in der Breite weniger stark als bei einer nicht relevanten Brücke. Dieser Unterschied ist anhand der Streuung, hier in Gestalt des Histogramms erkennbar.

Fig.2 zeigt die eine Verteilung von Messwerten, wie sie in Fahrt auf eine Schilderbrücke aufgenommen wurden, d.h. einer typischerweise eine Autobahn überbrückenden Stahlkonstruktion, welche Displays oder Schilder zur Anzeige von Geschwindigkeitsbeschränkungen oder Verkehrshinweise trägt.

### Bezugszahlenliste

- 1,2, 3,...n: Teilflächen

## Patentansprüche

1. Verfahren zum Erkennen und Klassifizieren von mittels einer aktiv Strahlung aussendenden Sensoreinrichtung erfassten Objekten hinsichtlich ihrer Relevanz für eine Fahrsituation eines sich bewegenden Fahrzeugs, wobei von der Sensoreinrichtung Strahlung ausgesandt und die an Objekten reflektierte Echostrahlung als Messwerte empfangen werden, beinhaltend folgende Schritte:
a) Erfassen von Messwerten in Bezug zur Fahrsituation des sich bewegenden Fahrzeugs,
b) Durchführen einer Analyse der durch die Messwerte abgebildeten Fahrsituation und Identifizieren wenigstens eines möglichen Objekts,
c) Klassifizieren des wenigstens einen identifizierten Objekts in eine Objektklasse einer Mehrzahl von Objektklassen, wobei
d) das Durchführen der Analyse der Messwerte folgendes beinhaltet:
d1) eine Transformation der erfassten Messwerte von einem fahrzeugfesten Koordinatensystem in ein raumfestes Koordinatensystem zur Erzeugung raumkoordinatenfester Messwerte, wobei diese Transformation auf der Basis der Fahrzeuggeschwindigkeit und der Gierrate des Fahrzeugs in der bestimmten Fahrsituation basiert,
d2) Unterteilen wenigstens einer im Erfassungsbereich der Strahlung aussendenden Sensoreinrichtung befindlichen und zur Fahrbahnoberfläche koplanaren oder parallelen Gesamtfläche in mehrere Teilflächen,
d3) Bestimmen der Anzahl und/oder der Streuung der erfassten raumkoordinatenfesten Messwerte für jede dieser Teilflächen, und dass
e) das Durchführen der Analyse der durch die Messwerte abgebildeten Fahrsituation und Identifizieren wenigstens eines möglichen Objekts folgendes beinhaltet:
e1) Vergleichen der Anzahl und/oder der Streuung der erfassten raumkoordinatenfesten Messwerte für jede dieser Teilflächen jeweils mit charakteristischen Mustern, und
e2) Identifizieren wenigstens eines eventuell in einer Teilfläche vorhandenen Objekts und Klassifizieren des wenigstens einen identifizierten Objekts in eine Objektklasse der Mehrzahl von Objektklassen abhängig von diesem Vergleich, **dadurch gekennzeichnet, dass**
f) aneinander angrenzende Teilflächen sich teilweise überlappen, wobei sich aneinander angrenzende Teilflächen nur teilweise, aber nicht vollständig überlappen, und
g) die Anzahl und/oder die Streuung der erfassten raumkoordinatenfesten Messwerte für jede dieser Teilflächen mit jeweils einem Schwellwert verglichen und bei Überschreiten der Schwellwerte für Anzahl und/oder Streuung durch die für die betreffende Teilfläche erfassten raumkoordinatenfesten Messwerte ein in der betreffenden Teilfläche vorhandenes Objekt identifiziert wird, und wobei
h) das Klassifizieren des identifizierten Objekts in eine Objektklasse der Mehrzahl von Objektklassen abhängig davon erfolgt, ob die Anzahl und/oder die Streuung der für die betreffende Teilfläche erfassten raumkoordinatenfesten Messwerte jeweils den zugeordneten Schwellwert überschritten hat oder nicht.

2. Verfahren nach Anspruch 1, **dadurch gekennzeichnet, dass** aus den erfassten raumkoordinatenfesten Messwerten für jede der Teilflächen ein Histogramm erstellt wird und das Klassifizieren eines in einer Teilfläche eventuell identifizierten Objekts in eine Objektklasse einer Mehrzahl von Objektklassen abhängig vom Histogramm der für die jeweilige Teilfläche erfassten raumkoordinatenfesten Messwerte erfolgt.

3. Vorrichtung zum Erkennen und Klassifizieren von mittels einer aktiv Strahlung aussendenden Sensoreinrichtung erfassten Objekten hinsichtlich ihrer Relevanz für eine bestimmte Fahrsituation eines sich bewegenden Fahrzeugs, wobei die Sensoreinrichtung ausgebildet ist, um Strahlung auszusenden und die an Objekten reflektierte Echostrahlung als Messwerte zu empfangen, wobei eine Auswerteeinrichtung zur Auswertung der durch die Sensoreinrichtung erfassten Messwerte vorgesehen ist, welche derart ausgebildet ist, dass sie
- eine Transformation der erfassten Messwerte von einem fahrzeugfesten Koordinatensystem in ein raumfestes Koordinatensystem zur Erzeugung raumkoordinatenfester Messwerte durchführt, wobei diese Transformation auf der Basis der Fahrzeuggeschwindigkeit und der Gierrate des Fahrzeugs in der bestimmten Fahrsituation basiert, und
- eine im Erfassungsbereich der Strahlung aussendenden Sensoreinrichtung befindliche und zur Fahrbahnoberfläche koplanare oder parallele Gesamtfläche in mehrere Teilflächen unterteilt, und
- die Anzahl sowie die Streuung der erfassten raumkoordinatenfesten Messwerte für jede dieser Teilflächen bestimmt, und
- die Anzahl und/oder die Streuung der erfassten raumkoordinatenfesten Messwerte für jede dieser Teilflächen jeweils mit charakteristischen Mustern vergleicht, und
- wenigstens ein eventuell in einer Teilfläche vorhandenes Objekts identifiziert und das wenigstens eine identifizierte Objekt in eine Objektklasse der Mehrzahl von Objektklassen abhängig von diesem Vergleich klassifiziert, **dadurch gekennzeichnet, dass** die Auswerteeinrichtung weiterhin derart ausgebildet ist, dass
- aneinander angrenzende Teilflächen sich teilweise überlappen, wobei sich aneinander angrenzende Teilflächen nur teilweise, aber nicht vollständig überlappen, und
- die Anzahl und/oder die Streuung der erfassten raumkoordinatenfesten Messwerte für jede dieser Teilflächen mit jeweils einem Schwellwert verglichen und bei Überschreiten der Schwellwerte für Anzahl und/oder Streuung durch die für die betreffende Teilfläche erfassten raumkoordinatenfesten Messwerte ein in der betreffenden Teilfläche vorhandenes Objekt identifiziert wird, und
- das Klassifizieren des identifizierten Objekts in eine Objektklasse der Mehrzahl von Objektklassen abhängig davon erfolgt, ob die Anzahl und/oder die Streuung der für die betreffende Teilfläche erfassten raumkoordinatenfesten Messwerte jeweils den zugeordneten Schwellwert überschritten hat oder nicht.

4. Vorrichtung nach Anspruch 3, **dadurch gekennzeichnet, dass** die Auswerteeinrichtung derart ausgebildet ist, dass aus den erfassten raumkoordinatenfesten Messwerten für jede der Teilflächen ein Histogramm erstellt wird und das Klassifizieren eines in einer Teilfläche eventuell identifizierten Objekts in eine Objektklasse einer Mehrzahl von Objektklassen abhängig vom Histogramm der für die jeweilige Teilfläche erfassten raumkoordinatenfesten Messwerte erfolgt.

5. Verwendung eines Verfahrens nach einem der Ansprüche 1 oder 2 oder einer Vorrichtung nach einem der Ansprüche 3 oder 4 für eine Geschwindigkeitsregelung eines Kraftfahrzeugs.

6. Verwendung nach Anspruch 5, **dadurch gekennzeichnet, dass** die Geschwindigkeitsregelung durch eine Adaptive Cruise Control (ACC) gebildet wird.

## Claims

1. Method for identifying and classifying objects, detected by means of a sensor apparatus which actively emits radiation, in terms of the relevance thereof to a driving situation of a moving vehicle, wherein radiation is emitted by the sensor apparatus and the echo radiation reflected at objects is received as measurement values, containing the following steps:
a) detecting measurement values in relation to the driving situation of the moving vehicle,
b) performing an analysis of the driving situation represented by the measurement values and identifying at least one possible object,
c) classifying the at least one identified object in an object class of a plurality of object classes, wherein
d) performing the analysis of the measurement values contains the following:
d1) transforming the detected measurement values from a coordinate system fixed in terms of the vehicle into a coordinate system fixed in terms of space for the purposes of generating measurement values fixed in terms of spatial coordinates, wherein this transformation is based on the basis of the vehicle speed and the yaw rate of the vehicle in the determined driving situation,
d2) subdividing at least one total area, which is situated in the detection region of the sensor apparatus emitting radiation and which is coplanar or parallel with the roadway surface, into a plurality of partial areas,
d3) determining the number and/or the statistical dispersion of the detected measurement values fixed in terms of spatial coordinates for each one of these partial areas, and in that
e) performing the analysis of the driving situation represented by the measurement values and identifying at least one possible object contain the following:
e1) comparing the number and/or and statistical dispersion of the detected measurement values fixed in terms of spatial coordinates for each one of these partial areas, in each case with characteristic patterns, and
e2) identifying at least one object possibly present in a partial area and classifying the at least one identified object in an object class of a plurality of object classes depending on this comparison, **characterized in that**
f) partial areas adjoining one another partly overlap, with partial areas adjoining one another overlapping only in part but not overlapping in full, and
g) the number and/or statistical dispersion of the detected measurement values, fixed in terms of spatial coordinates, for each of these partial areas is compared to a threshold in each case and an object present in the relevant partial area is identified if the thresholds for number and/or statistical dispersion are exceeded by the measurement values, fixed in terms of spatial coordinates, detected for the relevant partial area, and wherein
h) the identified object is classified in an object class of the plurality of object classes depending on whether or not the number and/or the statistical dispersion of the measurement values, fixed in terms of spatial coordinates, detected for the relevant partial area has exceeded the respectively associated threshold.

2. Method according to Claim 1, **characterized in that** a histogram is created for each one of the partial areas from the detected measurement values fixed in terms of spatial coordinates, and an object possibly identified in a partial area is classified into an object class of a plurality of object classes depending on the histogram of the measurement values, detected for the respective partial area, fixed in terms of spatial coordinates.

3. Device for identifying and classifying objects, detected by means of a sensor apparatus which actively emits radiation, in terms of the relevance thereof to a particular driving situation of a moving vehicle, wherein the sensor apparatus is embodied to emit radiation and receive the echo radiation reflected at objects as measurement values, wherein provision is made for an evaluation apparatus for evaluating the measurement values detected by the sensor apparatus, said evaluation apparatus being embodied in such a way that it
- transforms the detected measurement values from a coordinate system fixed in terms of the vehicle into a coordinate system fixed in terms of space for the purposes of generating measurement values fixed in terms of spatial coordinates, wherein this transformation is based on the basis of the vehicle speed and the yaw rate of the vehicle in the determined driving situation, and
- ÷ subdivides a total area, which is situated in the detection region of the sensor apparatus emitting radiation and which is coplanar or parallel with the roadway surface, into a plurality of partial areas, and
- determines the number and the statistical dispersion of the detected measurement values fixed in terms of spatial coordinates for each one of these partial areas, and
- compares the number and/or the statistical dispersion of the detected measurement values fixed in terms of spatial coordinates for each one of these partial areas, in each case with characteristic patterns, and
- identifies at least one object possibly present in a partial area and classifies the at least one identified object in an object class of a plurality of object classes depending on this comparison, **characterized in that** the evaluation apparatus is furthermore embodied in such a way that
- partial areas adjoining one another partly overlap, with partial areas adjoining one another overlapping only in part but not overlapping in full, and
- the number and/or statistical dispersion of the detected measurement values, fixed in terms of spatial coordinates, for each of these partial areas is compared to a threshold in each case and an object present in the relevant partial area is identified if the thresholds for number and/or statistical dispersion are exceeded by the measurement values, fixed in terms of spatial coordinates, detected for the relevant partial area, and
- the identified object is classified in an object class of the plurality of object classes depending on whether or not the number and/or the statistical dispersion of the measurement values, fixed in terms of spatial coordinates, detected for the relevant partial area has exceeded the respectively associated threshold.

4. Device according to Claim 3, **characterized in that** the evaluation apparatus is embodied in such a way that a histogram is created for each one of the partial areas from the detected measurement values fixed in terms of spatial coordinates and an object possibly identified in a partial area is classified into an object class of a plurality of object classes depending on the histogram of the measurement values, detected for the respective partial area, fixed in terms of spatial coordinates.

5. Use of a method according to either of Claims 1 and 2 or a device according to either of Claims 3 and 4 for controlling the speed of a motor vehicle.

6. Use according to Claim 5, **characterized in that** the speed control is formed by adaptive cruise control (ACC).

## Revendications

1. Procédé de reconnaissance et de classification d'objets, détectés au moyen d'un dispositif capteur émettant activement du rayonnement, du point de vue de leur pertinence sur une situation de circulation d'un véhicule en déplacement, dans lequel on émet du rayonnement par le dispositif capteur et on reçoit le rayonnement d'écho réfléchi sur des objets comme valeurs de mesure, comportant les stades suivants :
a) on relève des valeurs de mesure se rapportant à la situation de circulation du véhicule en déplacement,
b) on effectue une analyse de la situation de circulation représentée par les valeurs de mesure et on identifie au moins un objet éventuel,
c) on classe le au moins un objet identifié dans une classe d'objet parmi une pluralité de classes d'objet, dans lequel
d) effectuer l'analyse des valeurs de mesure comporte ce qui suit :
d1) une transformation des valeurs de mesure relevées d'un système de coordonnées, fixe par rapport au véhicule, en un système de coordonnées fixe dans l'espace pour produire des valeurs de mesure fixes dans des coordonnées de l'espace, cette transformation reposant sur la vitesse du véhicule et le taux d'embardée du véhicule dans la situation de circulation déterminée,
d2) une subdivision en plusieurs surfaces partielles d'une surface d'ensemble se trouvant dans la zone de détection du dispositif capteur émettant le rayonnement et coplanaire ou parallèle à la surface de la chaussée,
d3) une détermination du nombre et/ou de la dispersion des valeurs de mesure relevées fixes dans le système de coordonnées dans l'espace pour chacune de ces surfaces partielles et en ce que
e) effectuer l'analyse de la situation de circulation représentée par les valeurs de mesure et identifier au moins un objet éventuel comporte ce qui suit :
e1) comparer le nombre et/ou la dispersion des valeurs de mesure relevées fixes dans le système de coordonnées dans l'espace pour chacune de ces surfaces partielles, respectivement, à des modèles caractéristiques et
e2) identifier au moins un objet éventuellement présent dans une surface partielle et classer le au moins un objet identifié dans une classe d'objet parmi la pluralité de classes d'objet en fonction de cette comparaison, **caractérisé en ce que**
f) des surfaces partielles voisines l'une de l'autre se chevauchent en partie, des surfaces partielles voisines l'une de l'autre ne se chevauchant que partiellement mais non entièrement et
g) on compare, respectivement, à une valeur de seuil, le nombre/ou la dispersion des valeurs de mesure relevées fixes dans les coordonnées dans l'espace pour chacune de ces surfaces partielles et, si les valeurs de seuil du nombre et/ou de la dispersion sont dépassées par les valeurs de mesure relevées fixes dans les coordonnées dans l'espace pour les surfaces partielles concernées, on identifie un objet présent dans les surfaces partielles concernées et dans lequel
h) la classification de l'objet identifié dans une classe d'objet parmi la pluralité de classes d'objet s'effectue en fonction du point de savoir si le nombre et/ou la dispersion des valeurs de mesure relevées fixes dans les coordonnées dans l'espace pour la surface partielle concernée a ou non dépassé la valeur de seuil respectivement associée.

2. Procédé suivant la revendication 1, **caractérisé en ce que** l'on établit, à partir des valeurs de mesure relevées fixes dans les coordonnées dans l'espace, pour chacune des surfaces partielles, un histogramme et on effectue la classification d'un objet identifié éventuellement dans une surface partielle dans une classe d'objet parmi une pluralité de classes d'objet, en fonction de l'histogramme des valeurs de mesure relevées fixes dans les coordonnées dans l'espace pour la surface partielle respective.

3. Système de reconnaissance et de classification d'objets, détectés au moyen d'un dispositif capteur émettant activement du rayonnement, du point de vue de leur pertinence pour une situation de circulation déterminée d'un véhicule en mouvement, le dispositif capteur étant constitué pour émettre du rayonnement et recevoir, comme valeurs de mesure, le rayonnement d'écho réfléchi sur les objets, dans lequel il est prévu un dispositif d'exploitation pour exploiter les valeurs de mesure relevées par le dispositif capteur, dispositif d'exploitation qui est constitué de manière
- à effectuer une transformation des valeurs de mesure relevées d'un système de coordonnées fixe par rapport au véhicule en un système de coordonnées fixe dans l'espace pour produire des valeurs de mesure fixes dans des coordonnées de l'espace, cette transformation reposant sur la vitesse du véhicule et le taux d'embardée du véhicule dans la situation de circulation déterminée et
- à subdiviser en plusieurs surfaces partielles d'une surface d'ensemble se trouvant dans la zone de détection du dispositif capteur émettant le rayonnement et coplanaire ou parallèle à la surface de la chaussée et
- à déterminer le nombre ainsi que la dispersion des valeurs de mesure relevées fixes en coordonnées dans l'espace pour chacune de ces surfaces partielles et
- pour comparer le nombre et/ou la dispersion des valeurs de mesure relevées fixes dans les coordonnées dans l'espace pour chacune de ces surfaces partielles, respectivement à des modèles caractéristiques et
- pour identifier au moins un objet éventuellement présent dans une surface partielle et classer le au moins un objet identifié dans une classe d'objet parmi la pluralité de classes d'objet en fonction de cette comparaison, **caractérisé en ce que** le dispositif d'exploitation est constitué, en outre, de manière
- à ce que des surfaces partielles voisines l'une de l'autre se chevauchent partiellement, des surfaces partielles voisines l'une de l'autre se chevauchant seulement en partie mais non complètement et
- à comparer, respectivement, à une valeur de seuil, le nombre/ou la dispersion des valeurs de mesure relevées fixes dans les coordonnées dans l'espace pour chacune de ces surfaces partielles et, si les valeurs de seuil, du nombre et/ou de la dispersion sont dépassées par les valeurs de mesure relevées fixes dans les coordonnées dans l'espace pour les surfaces partielles concernées, à identifier un objet présent dans les surfaces partielles concernées et
- à effectuer la classification de l'objet identifié dans une classe d'objet parmi la pluralité de classes d'objet s'effectue en fonction du point de savoir si le nombre et/ou la dispersion des valeurs de mesure relevées fixes dans les coordonnées dans l'espace pour la surface partielle concernée a ou non dépassé la valeur de seuil respectivement associée.

4. Système suivant la revendication 3, **caractérisé en ce que** le dispositif d'exploitation est constitué de manière à établir un histogramme et à effectuer la classification d'un objet identifié éventuellement dans une surface partielle dans une classe d'objet parmi une pluralité de classes d'objet, en fonction de l'histogramme des valeurs de mesure relevées fixes dans les coordonnées dans l'espace pour la surface partielle respective.

5. Utilisation d'un procédé suivant l'une des revendications 1 ou 2 ou d'un système suivant l'une des revendications 3 ou 4 pour régler la vitesse d'un véhicule automobile.

6. Utilisation suivant la revendication 5, **caractérisée en ce que** l'on forme le réglage de la vitesse par un adaptatif cruise control (ACC).
